# EUROPÄISCHE PATENTSCHRIFT

(11) **EP 3 603 765 B1**
(45) Veröffentlichungstag und Bekanntmachung des Hinweises auf die Patenterteilung: **29.11.2023**
(21) Anmeldenummer: 19189854.3
(22) Anmeldetag: 02.08.2019
(51) Int. Cl.: B01D 17/00, B01D 17/02, B01D 17/12, C02F 1/40, C02F 103/32

(54) **ABSCHEIDERVORRICHTUNG**
SEPARATOR DEVICE
DISPOSITIF SÉPARATEUR

(30) Priorität: 03.08.2018 DE 102018118941
(43) Veröffentlichungstag der Anmeldung: 05.02.2020
(73) Patentinhaber: Kessel AG, 85101 Lenting (DE)
(72) Erfinder: Kessel, Bernhard, 85101 Lenting (DE)
(74) Vertreter: Canzler & Bergmeier Patentanwälte Partnerschaft mbB

(56) Entgegenhaltungen:
- DE-A1- 3 934 874
- DE-A1- 4 402 185
- DE-A1-102012 015 472
- DE-B4-102012 015 472
- DE-C2- 3 934 874
- DE-U1- 29 518 862

## Beschreibung

### TECHNISCHES GEBIET

Die vorliegende Erfindung betrifft eine Abscheidervorrichtung zur Vorreinigung von Abwasser vor der Einleitung in ein Kanalsystem.

### STAND DER TECHNIK

Aus der EP 0 693 594 B1 ist eine Fettabscheidevorrichtung zum Abtrennen von Fett und Schlamm aus Abwasser mit einer ersten Stufe zum Abtrennen des Schlamms und einer zweiten Stufe mit einem nach dem Aufschwimmprinzip arbeitenden Fettabscheider zum Abtrennen des Fetts bekannt. Die erste Stufe weist ein zum Aussieben der den Schlamm bildenden Feststoffteilchen geeignetes, feststehendes Schlammsieb (15) auf, durch das das Abwasser geleitet wird, wobei die erste Stufe eine automatisch und kontinuierlich arbeitende Einrichtung zum Abziehen oder Abschieben der vom Schlammsieb zurückbehaltenen, den Schlamm bildenden Feststoffe aufweist, wobei das Schlammsieb vor dem Fettabscheider angeordnet und mit diesem verbunden ist.

Dokument DE 39 34 874 A1 veröffentlicht eine Abscheidervorrichtung zur Reinigung von Abwasser.

### OFFENBARUNG DER ERFINDUNG

Die Aufgabe der vorliegenden Erfindung liegt darin, eine verbesserte Abscheidervorrichtung bereitzustellen, um die Abscheideeffizienz und/oder - wirkung weiter zu erhöhen und/oder den Aufbau weiter zu verbessern.

Nach einem Aspekt der vorliegenden Erfindung wird eine Abscheidervorrichtung zur gebäudeseitigen Vorreinigung von Abwasser vor der Einleitung in ein Kanalsystem, insbesondere für Nahrungsmittel verarbeitende Betriebe, bereitgestellt, mit einer Siebeinheit, die einen Abwasserzulauf, einen Sieb zum Zurückhalten von in dem zugeführten Abwasser befindlichen Grobstoffen und eine Förderschnecke umfasst. Die Förderschnecke korrespondiert vorzugsweise derart mit dem Sieb, dass die von dem Sieb zurückgehaltenen Grobstoffe in einen ersten Sammelbehälter gefördert werden können. Ferner umfasst die Siebeinheit einen Schneckenmotor zum Rotieren der Förderschnecke. Die Förderschnecke kann gegenüber dem Sieb, der dann insbesondere feststehend ausgebildet ist, rotierbar sein. Alternativ kann die Förderschneck und der Sieb als Siebtrommel ausgebildet sein, bei der die Förderschnecke und der Sieb eine Einheit bilden und gemeinsam vom Schneckenmotor, der dann insbesondere ein Sieb-Schneckenmotor ist, rotierbar sind. Die Abscheidevorrichtung umfasst des Weiteren eine Fettabscheidereinheit, die der Siebeinheit in Durchflussrichtung des Abwassers nachgelagert ist und die einen Abscheidebehälter zum Aufnehmen des von der Siebeinheit gesiebten Abwassers, einen Skimmer, mit dem das sich im Abscheidebehälter an der Abwasseroberfläche sammelnde Fett aufgenommen und in einen zweiten Sammelbehälter gefördert werden kann, und einen Abwasserabfluss umfasst. Auch umfasst die Abscheidevorrichtung eine Steuereinheit zum Steuern der Abscheidevorrichtung. Der Skimmer umfasst ein ringförmig geschlossenes Fettaufnahmeelement zum Eintauchen in das in dem Abscheidebehälter befindliche Abwasser, einen mit diesem korrespondierenden Abstreifer zum Abstreifen des von dem Fettaufnahmeelement an seiner Oberfläche aufgenommenen Fetts und einen Skimmermotor zum Antreiben des Fettaufnahmeelements.

Der Skimmer ist ein Schlauch- oder Bandskimmer.

Gemäß einer vorteilhaften Weiterbildung der vorliegenden Erfindung weisen die Siebeinheit und die Fettabscheidereinheit jeweils ein separates Gehäuse auf und/oder sind über ein Verbindungsrohr miteinander verbunden oder die Siebeinheit und die Fettabscheidereinheit sind in einem gemeinsamen Gehäuse integriert.

Gemäß einer vorteilhaften Weiterbildung der vorliegenden Erfindung umfasst die Siebeinheit einen Schwenkmechanismus, mittels dem die Förderschnecke und/oder der Sieb zwischen einer Betriebsstellung und einer Wartungsstellung schwenkbar sind.

Gemäß einer vorteilhaften Weiterbildung der vorliegenden Erfindung umfasst der Schwenkmechanismus ein Gelenk, insbesondere ein Scharniergelenk, das vorzugsweise im Bereich der Mitte der Förderschnecke angeordnet ist.

Gemäß einer vorteilhaften Weiterbildung der vorliegenden Erfindung umfasst die Siebeinheit eine Wartungsöffnung, zu der die Förderschnecke in der Wartungsstellung hingeschwenkt ist.

Gemäß einer vorteilhaften Weiterbildung der vorliegenden Erfindung ist das zumindest eine Gehäuse ein Kunststoffgehäuse.

Die Steuereinheit ist derart ausgebildet, dass diese den Schneckenmotor und/oder Skimmermotor in Abhängigkeit hinterlegter Zeitintervalle und/oder in Abhängigkeit zumindest eines Sensorsignals ein- und/oder ausschaltet.

Gemäß einer vorteilhaften Weiterbildung der vorliegenden Erfindung weist die Siebeinheit einen mit der Steuereinheit verbundenen und/oder im Abwasserzulauf angeordneten ersten Sensor auf, mit dem ein Zufluss des Abwassers in die Siebeinheit und/oder ein Füllstand des Abwassers in der Siebeinheit erfassbar ist.

Gemäß einer vorteilhaften Weiterbildung der vorliegenden Erfindung ist die Steuereinheit derart ausgebildet, dass diese den Schneckenmotor bei mit dem ersten Sensor erfassten Zufluss von Abwasser und/oder bei Erreichen eines in der Steuereinheit hinterlegten maximalen Schwellfüllstands einschaltet und/oder bei Ende des Zuflusses von Abwasser und/oder bei Erreichen eines in der Steuereinheit hinterlegten minimalen Schwellfüllstands ausschaltet.

Gemäß einer vorteilhaften Weiterbildung der vorliegenden Erfindung weist die Siebeinheit einen mit der Steuereinheit verbundenen und/oder im ersten Sammelbehälter angeordneten zweiten Sensor auf, mit dem ein Füllstand des ersten Sammelbehälters erfassbar ist.

Gemäß einer vorteilhaften Weiterbildung der vorliegenden Erfindung ist die Steuereinheit derart ausgebildet, dass diese den Schneckenmotor ausschaltet, ein erneutes Einschalten verhindert und/oder ein Signal zum manuellen Entleeren des ersten Sammelbehälters ausgibt, wenn und/oder solange über den zweiten Sensor ein maximal zulässiger Füllstand des ersten Sammelbehälters erkannt wurde.

Gemäß einer vorteilhaften Weiterbildung der vorliegenden Erfindung weist die Fettabscheidereinheit einen mit der Steuereinheit verbundenen und/oder im Abscheidebehälter angeordneten dritten Sensor auf, mit dem eine Fetthöhe des sich an der Abwasseroberfläche sammelnden Fetts, insbesondere mittels Ultraschall, erfassbar ist.

Gemäß einer vorteilhaften Weiterbildung der vorliegenden Erfindung ist die Steuereinheit derart ausgebildet, dass diese den Skimmermotor bei Erreichen einer in der Steuereinheit hinterlegten maximalen Fetthöhe einschaltet und/oder bei Erreichen einer in der Steuereinheit hinterlegten minimalen Fetthöhe ausschaltet.

Gemäß einer vorteilhaften Weiterbildung der vorliegenden Erfindung weist die Fettabscheidereinheit einen mit der Steuereinheit verbundenen und/oder im zweiten Sammelbehälter angeordneten vierten Sensor auf, mit dem ein Füllstand des zweiten Sammelbehälters erfassbar ist.

Gemäß einer vorteilhaften Weiterbildung der vorliegenden Erfindung ist die Steuereinheit derart ausgebildet, dass diese den Skimmermotor ausschaltet, ein erneutes Einschalten verhindert und/oder ein Signal zum manuellen Entleeren des zweiten Sammelbehälters ausgibt, wenn und/oder solange über den vierten Sensor ein maximal zulässiger Füllstand des zweiten Sammelbehälters erkannt wurde.

Gemäß einer vorteilhaften Weiterbildung der vorliegenden Erfindung weist die Abscheidervorrichtung eine Feinschlammeinheit auf, mit der sich am Boden des Abscheidebehälters absetzender Feinschlamm aus dem Abscheidebehälter entfernbar ist.

Gemäß einer vorteilhaften Weiterbildung der vorliegenden Erfindung umfasst die Feinschlammeinheit einen Absetzbehälter, der bodenseitig mit dem Abscheidebehälter über eine Leitung verbunden ist, eine Pumpe, mit der der Feinschlamm aus dem Abscheidebehälter in den Absetzbehälter gepumpt werden kann, und/oder ein Absperrelement, über das der sich im Absetzbehälter abgesetzte Feinschlamm im geöffneten Zustand in einen Schlammbehälter abgelassen werden kann.

Gemäß einer vorteilhaften Weiterbildung der vorliegenden Erfindung weist die Feinschlammeinheit einen mit der Steuereinheit verbundenen fünften Sensor zum Überwachen des Absperrelements auf und/oder die Steuereinheit ist derart ausgebildet, dass diese bei geöffnetem Absperrelement ein Einschalten der Pumpe verhindert.

### KURZE BESCHREIBUNG DER ZEICHNUNGEN

Im Folgenden wird die vorliegende Erfindung anhand von Zeichnungen näher erläutert, damit die Prinzipien, Besonderheiten und Vorteile der vorliegenden Erfindung besser zu verstehen sind.

Es zeigt:
- **FIG. 1**: eine Abscheidervorrichtung gemäß einem beispielhaften Ausführungsbeispiel in schematischer Darstellung,
- **FIG. 2**: den Zustand einer Siebeinheit der Abscheidervorrichtung mit einer in Betriebsstellung befindlichen Förderschnecke in schematischer Darstellung,
- **FIG. 3**: den Zustand der Siebeinheit der Abscheidervorrichtung mit einer in Wartungsstellung befindlichen Förderschnecke in schematischer Darstellung.

### AUSFÜHRUNGSFORMEN

Um die zu lösende Aufgabe, die technischen Ausgestaltungen sowie die vorteilhaften technischen Wirkungen der vorliegenden Erfindung weiter zu verdeutlichen, wird die vorliegende Erfindung in der nachfolgenden Beschreibung in Kombination mit Figuren und mehreren beispielhaften Ausführungsbeispielen näher dargestellt. Es versteht sich, dass die hier beschriebenen Ausführungsbeispiele lediglich zur Erläuterung der vorliegenden Erfindung herangezogen werden und nicht beschränkend zu verstehen sind.

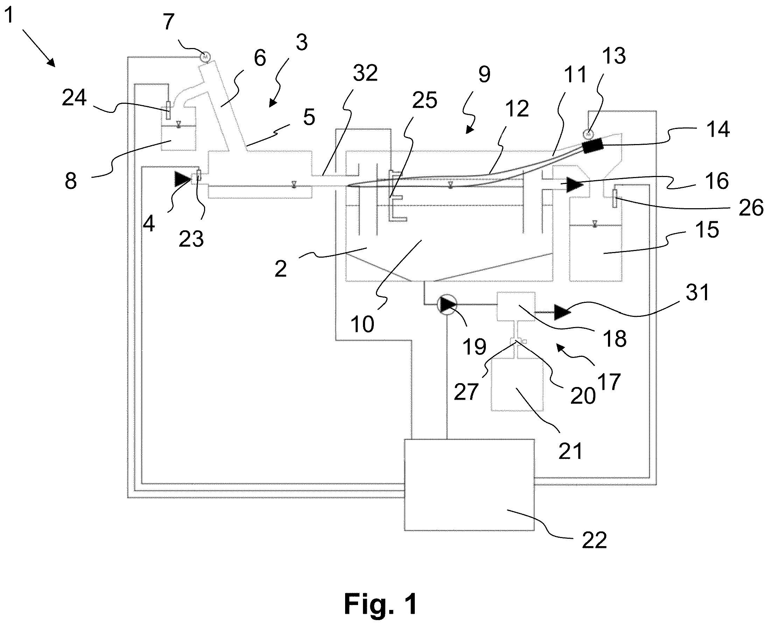

In Fig. 1 ist eine Abscheidervorrichtung 1 gemäß einem beispielhaften erfindungsgemäßen Ausführungsbeispiel schematisch dargestellt. Die Abscheidervorrichtung 1 ist eingerichtet zur Vorreinigung, bspw. gebäudeseitigen und/oder werkstattseitigen Vorreinigung, von Abwasser vor der Einleitung in ein Kanalsystem, bspw. in ein unterirdisches Rohrleitungsnetz. Eine derartige Abwasserbehandlung findet insbesondere in Nahrungsmittel verarbeitenden Betrieben Verwendungen.

Wie in Fig. 1 dargestellt, umfasst die Abscheidervorrichtung 1 vor allem eine Siebeinheit 3, eine der Siebeinheit 3 in Durchflussrichtung des Abwassers nachgelagerte Fettabscheidereinheit 9 und eine Steuereinheit 22 zum Steuern der Abscheidevorrichtung 1.

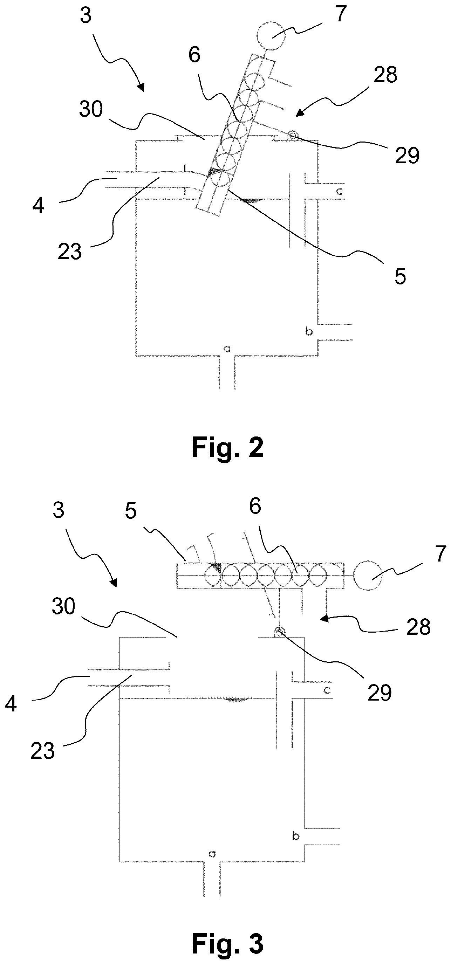

Die Siebeinheit 3 umfasst, wie insbesondere aus Fig. 2 und 3 ersichtlich ist, einen Abwasserzulauf 4 zum Aufnehmen des Abwassers, einen Sieb 5 zum Zurückhalten von in dem über den Abwasserzulauf 4 zugeführten Abwasser befindlichen Grobstoffen, eine derart mit dem Sieb 5 korrespondierende Förderschnecke 6, dass die von dem Sieb 5 zurückgehaltenen Grobstoffe in einen ersten Sammelbehälter 8 gefördert werden können, und einen Schneckenmotor 7, bspw. einen Elektromotor, zum Rotieren der Förderschnecke 6. Der Sieb 5 kann gemäß einem ersten Ausführungsbeispiel gegenüber der Förderschnecke 6 ortsfest bzw. feststehend ausgebildet sein, so dass sich die Förderschnecke 6 an dem Sieb 5 vorbeibewegt. In diesem Fall kann die Förderschnecke 6 an ihrem Außenumfang nicht dargestellte Reinigungsbürsten aufweisen, mit denen Verunreinigungen, die den Sieb 5 verstopfen, gelöst werden können. Alternativ kann die Förderschneck 6 und der Sieb 5 aber auch als Siebtrommel ausgebildet sein, bei der die Förderschnecke 6 und der Sieb 5 eine Einheit bilden, die gemeinsam vom Schneckenmotor 7, der dann insbesondere ein Sieb-Schneckenmotor ist, rotierbar sind.

Die Fettabscheidereinheit 9 umfasst unter anderem einen Abscheidebehälter 10 zum Aufnehmen des von der Siebeinheit 3 gesiebten Abwassers, einen Skimmer 11, mit dem das sich im Abscheidebehälter 10 an der Abwasseroberfläche sammelnde Fett aufgenommen und in einen zweiten Sammelbehälter 15 gefördert werden kann, und einen Abwasserabfluss 16 zur Abfuhr des Abwassers nach der Vorreinigung.

Der Skimmer 11 umfasst zumindest folgende Bauteile, nämlich ein ringförmig geschlossenes und zum Aufnehmen bspw. zur Adsorption von Fett vorgesehenes Fettaufnahmeelement 12 zum Eintauchen in das in dem Abscheidebehälter 10 befindliche Abwasser, einen mit diesem Fettaufnahmeelement 12 korrespondierenden Abstreifer 14 zum Abstreifen des von dem Fettaufnahmeelement 12 an seiner Oberfläche aufgenommenen Fetts und/oder einen Skimmermotor 13 zum Antreiben des Fettaufnahmeelements 12. Im Betrieb befindet sich das Fettaufnahmeelement 12 normalerweise in der Fettschicht an der Oberfläche des Abwassers, um das Fett mit hoher Effizienz zu sammeln, und wird gleichzeitig von dem Abstreifer 14 angetrieben, so dass sich das Fettaufnahmeelement 12 relativ zu dem Abstreifer 14 bewegt, woraufhin das an der Oberfläche des Fettaufnahmeelements 12 aufgenommene Fett abgestreift wird. Das abgestreifte Fett fällt dann in den zweiten Sammelbehälter 15.

Der Skimmer 11 ist ein Schlauch- oder Bandskimmer.

Gemäß einem Ausführungsbeispiel der vorliegenden Erfindung weisen die Siebeinheit 3 und die Fettabscheidereinheit 9 jeweils ein separates Gehäuse auf. Die Siebeinheit 3 und die Fettabscheidereinheit 9 sind somit voneinander separiert. Hierbei sind sie vorzugsweise über ein Verbindungsrohr 32 miteinander verbunden. Alternativ können die Siebeinheit 3 und die Fettabscheidereinheit 9 auch in einem gemeinsamen Gehäuse integriert sein. Vorteilhafterweise ist das zumindest eine Gehäuse ein Kunststoffgehäuse.

Gemäß einem Ausführungsbeispiel der vorliegenden Erfindung weist die Siebeinheit 3 einen Schwenkmechanismus 28 auf, mittels dem die Förderschnecke 6 zwischen einer Betriebsstellung und einer Wartungsstellung schwenkbar sind. In Fig. 2 ist die Betriebsstellung gezeigt und in Fig. 3 die Wartungsstellung. Der Sieb 5 ist auch mittels des Schwenkmechanismus 28 zwischen einer Betriebsstellung und einer Wartungsstellung schwenkbar, um die Wartung, die Reparatur und den Austausch zu erleichtern.

Bevorzugt weist der Schwenkmechanismus 28 ein Gelenk 29, insbesondere ein Scharniergelenk, auf, das vorzugsweise im Bereich der Mitte der Förderschnecke 6 angeordnet ist. Diese Anordnung ermöglicht eine ausgewogenere Steuerung der Schwenkbewegung.

Damit die Förderschnecke 6 in die äußere Wartungsstellung schwenkbar ist, weist die Siebeinheit 3 vorzugsweis eine Wartungsöffnung 30 auf, zu der die Förderschnecke 6 in der Wartungsstellung hinschwenkbar ist.

Um den Betrieb der Abscheidevorrichtung 1 zu steuern, kann die Steuereinheit 22 derart ausgebildet sein, dass diese den Schneckenmotor 7 und/oder Skimmermotor 13 in Abhängigkeit hinterlegter Zeitintervalle und/oder in Abhängigkeit zumindest eines Sensorsignals ein- und/oder ausschaltet. Beispielsweise kann ein Arbeitsablauf vorgespeichert werden, damit die Abscheidevorrichtung 1 anhand dieses Arbeitsablaufs arbeitet.

Beispielsweise weist die Siebeinheit 3 einen bevorzugt im Abwasserzulauf 4 angeordneten und mit der Steuereinheit 22 verbundenen ersten Sensor 23 auf, mit dem ein Zufluss des Abwassers in die Siebeinheit 3 und/oder ein Füllstand des Abwassers in der Siebeinheit 3 erfassbar ist. Durch derartige Informationen kann die Betätigung des jeweiligen Bauteils durch die Steuereinheit 22 gesteuert werden.

Gemäß einem Ausführungsbeispiel der vorliegenden Erfindung ist die Steuereinheit 22 derart ausgebildet, dass diese den Schneckenmotor 7 bei mit dem ersten Sensor 23 erfassten Zufluss von Abwasser und/oder bei Erreichen eines in der Steuereinheit 22 hinterlegten maximalen Schwellfüllstands einschaltet, um den ausgefilterten Feststoff in den ersten Sammelbehälter 8 zu fördern. Zusätzlich oder alternativ ist die Steuereinheit 22 derart ausgebildet, dass diese den Schneckenmotor 7 bei Ende des Zuflusses von Abwasser und/oder bei Erreichen eines in der Steuereinheit 22 hinterlegten minimalen Schwellfüllstands ausschaltet.

Die Siebeinheit 3 kann ferner einen bevorzugt im ersten Sammelbehälter 8 angeordneten und mit der Steuereinheit 22 verbundenen zweiten Sensor 24 aufweisen, mit dem ein Füllstand des ersten Sammelbehälters 8 erfassbar ist. In diesem Fall ist die Steuereinheit 22 derart ausgebildet, dass diese den Schneckenmotor 7 ausschaltet, ein erneutes Einschalten verhindert und/oder ein Signal, bspw. ein akustisches und/oder optisches Signal, zum manuellen Entleeren des ersten Sammelbehälters 8 ausgibt, wenn und/oder solange über den zweiten Sensor 24 ein maximal zulässiger Füllstand des ersten Sammelbehälters 8 erkannt wurde. Dadurch kann verhindert werden, dass der Feststoff weiter in den bereits vollgefüllten ersten Sammelbehälter 8 gefördert wird.

Gemäß einem beispielhaften Ausführungsbeispiel der vorliegenden Erfindung weist die Fettabscheidereinheit 9 einen bevorzugt im Abscheidebehälter 10 angeordneten und mit der Steuereinheit 22 verbundenen dritten Sensor 25 auf, mit dem eine Fetthöhe des sich im Abscheidebehälter 10 an der Abwasseroberfläche sammelnden Fetts erfassbar ist. Der dritte Sensor 25 ist bevorzugt ein Ultraschallsenseor.

In diesem Fall ist die Steuereinheit 22 derart ausgebildet, dass diese den Skimmermotor 13 bei Erreichen einer in der Steuereinheit 22 hinterlegten maximalen Fetthöhe einschaltet, um das Fett rechtzeitig und hocheffektiv abzuschöpfen, und/oder bei Erreichen einer in der Steuereinheit 22 hinterlegten minimalen Fetthöhe ausschaltet. Bei niedriger Fetthöhe wird der Skimmermotor außer Betrieb gesetzt. Wenn die Fetthöhe ein bestimmtes Niveau erreicht hat, beginnt erst die Abschöpfung. Dadurch kann Energie gespart werden.

Die Fettabscheidereinheit 9 kann des Weiteren einen im zweiten Sammelbehälter 15 angeordneten und mit der Steuereinheit 22 verbundenen vierten Sensor 26 aufweisen, mit dem ein Füllstand des zweiten Sammelbehälters 15 erfassbar ist. Hierbei ist die Steuereinheit 22 vorzugsweise derart ausgebildet, dass diese den Skimmermotor 13 ausschaltet, ein erneutes Einschalten verhindert und/oder ein Signal zum manuellen Entleeren des zweiten Sammelbehälters 15 ausgibt, wenn und/oder solange über den vierten Sensor 26 ein maximal zulässiger Füllstand des zweiten Sammelbehälters 15 erkannt wurde.

Aus Fig. 1 ist ersichtlich, dass die Abscheidervorrichtung 1 vorzugsweise auch eine Feinschlammeinheit 17 aufweist, mit der sich am Boden des Abscheidebehälters 10 absetzender Feinschlamm aus dem Abscheidebehälter 10 entfernbar ist. Somit kann verhindert werden, dass sich der Feinschlamm allmählich im Abscheidebehälter 10 ansammelt, so dass die Abscheidervorrichtung nicht weiter arbeiten kann.

Vorzugsweise umfasst die Feinschlammeinheit 17 einen Absetzbehälter 18, der bodenseitig mit dem Abscheidebehälter 10 über eine Leitung verbunden ist, eine Pumpe 19, mit der der Feinschlamm aus dem Abscheidebehälter 10 in den Absetzbehälter 18 gepumpt werden kann, und/oder ein Absperrelement 20, über das der sich im Absetzbehälter 18 abgesetzte Feinschlamm im geöffneten Zustand des Absperrelements 20 in einen Schlammbehälter 21 abgelassen werden kann. Selbstverständlich ist auch möglich, den Feinschlamm unmittelbar in den Schlammbehälter 21 zu fördern.

Hierbei weist die Feinschlammeinheit 17 einen mit der Steuereinheit 22 verbundenen fünften Sensor 27 zum Überwachen des Absperrelements 20 auf. Vorzugsweise ist die Steuereinheit 22 derart ausgebildet, dass diese bei geöffnetem Absperrelement 20 ein Einschalten der Pumpe 19 verhindert, um durch die Zusammenwirkung der Öffnung des Absperrelements und der Ausschaltung der Pumpe den feinen Schlamm abzulassen.

Es ist möglich, dass der im Absetzbehälter 18 befindliche Schlamm auch fetthaltiges Abwasser enthält. Dazu ist ein weiterer Abfluss vorgesehen, wie in Fig. 1 gezeigt, um das Abwasser wieder in den Abscheidebehälter 10 zu leiten und damit das Fett weiter zu entfernen. Dies ist in Fig. 1 nur mit einem Pfeil 31 schematisch angedeutet.

Wie in Fig. 2 und 3 gezeigt, kann das Verbindungsrohr 32 zwischen der Siebeinheit 3 und der Fettabscheidereinheit 9 an drei alternativen Positionen aus dem Behälter der Siebeinheit 3 austreten. Diese drei alternativen Positionen sind in den Figuren 2 und 3 als Abflüsse bzw. Positionen a, b und c kenntlichgemacht. Wenn die Siebeinheit 3 und die Fettabscheidereinheit 9 zwei separate Vorrichtungen sind, ist das diese miteinander verbindende Verbindungsrohr 32 bzw. der Abwasserabfluss der Siebeinheit 3 vorzugsweise an der Position a oder b angeordnet. Wenn Siebeinheit 3 in die Fettabscheidereinheit 9 integriert ist, ist der Abwasserabfluss 16 vorzugsweise an der Position c angeordnet, wie dies beispielsweise in Figur 1 dargestellt ist.

### BEZUGSZEICHENLISTE

- 1: Abscheidervorrichtung
- 2: Abwasser
- 3: Siebeinheit
- 4: Abwasserzulauf
- 5: Sieb
- 6: Förderschnecke
- 7: Schneckenmotor
- 8: erster Sammelbehälter
- 9: Fettabscheidereinheit
- 10: Abscheidebehälter
- 11: Skimmer
- 12: Fettaufnahmeelement
- 13: Skimmermotor
- 14: Abstreifer
- 15: zweiter Sammelbehälter
- 16: Abwasserabfluss
- 17: Feinschlammeinheit
- 18: Absetzbehälter
- 19: Pumpe
- 20: Absperrelement
- 21: Schlammbehälter
- 22: Steuereinheit
- 23: erster Sensor
- 24: zweiter Sensor
- 25: dritter Sensor
- 26: vierter Sensor
- 27: fünfter Sensor
- 28: Schwenkmechanismus
- 29: Gelenk
- 30: Wartungsöffnung
- 31: Pfeil
- 32: Verbindungsrohr

## Patentansprüche

1. Abscheidervorrichtung (1) zur gebäudeseitigen Vorreinigung von Abwasser vor der Einleitung in ein Kanalsystem, insbesondere für Nahrungsmittel verarbeitende Betriebe,
mit einer Siebeinheit (3),
die einen Abwasserzulauf (4),
einen Sieb (5) zum Zurückhalten von in dem zugeführten Abwasser befindlichen Grobstoffen,
eine derart mit dem Sieb (5) korrespondierende Förderschnecke (6), dass die von dem Sieb (5) zurückgehaltenen Grobstoffe in einen ersten Sammelbehälter (8) gefördert werden können, und
einen Schneckenmotor (7) zum Rotieren der Förderschnecke (6) umfasst,
mit einer Fettabscheidereinheit (9),
die der Siebeinheit (3) in Durchflussrichtung des Abwassers nachgelagert ist und
die einen Abscheidebehälter (10) zum Aufnehmen des von der Siebeinheit (3) gesiebten Abwassers,
einen Skimmer (11), mit dem das sich im Abscheidebehälter (10) an der Abwasseroberfläche sammelnde Fett aufgenommen und in einen zweiten Sammelbehälter (15) gefördert werden kann, und
einen Abwasserabfluss (16) umfasst,
wobei der Skimmer (11) ein ringförmig geschlossenes Fettaufnahmeelement (12) zum Eintauchen in das in dem Abscheidebehälter (10) befindliche Abwasser und einen Skimmermotor (13) zum Antreiben des Fettaufnahmeelements (12) umfasst, und
mit einer Steuereinheit (22) zum Steuern der Abscheidevorrichtung (1),
**dadurch gekennzeichnet, dass** der Skimmer einen mit dem ringförmig geschlossenen Fettaufnahmeelement (12) korrespondierenden Abstreifer (14) zum Abstreifen des von dem Fettaufnahmeelement (12) an seiner Oberfläche aufgenommenen Fetts umfasst,
dass der Skimmer (11) ein Schlauch- oder Bandskimmer ist und dass die Steuereinheit (22) derart ausgebildet ist, dass diese den Schneckenmotor (7) und/oder Skimmermotor (13) in Abhängigkeit hinterlegter Zeitintervalle und/oder in Abhängigkeit zumindest eines Sensorsignals ein- und/oder ausschaltet.

2. Abscheidervorrichtung nach dem vorherigen Anspruch, **dadurch gekennzeichnet, dass** die Siebeinheit (3) und die Fettabscheidereinheit (9) jeweils ein separates Gehäuse aufweisen und/oder über ein Verbindungsrohr (32) miteinander verbunden sind oder
dass die Siebeinheit (3) und die Fettabscheidereinheit (9) in einem gemeinsamen Gehäuse integriert sind und/oder
dass das zumindest eine Gehäuse ein Kunststoffgehäuse ist.

3. Abscheidervorrichtung nach einem oder mehreren der vorherigen Ansprüche, **dadurch gekennzeichnet, dass** die Siebeinheit (3) einen Schwenkmechanismus (28) umfasst, mittels dem die Förderschnecke (6) und/oder der Sieb (5) zwischen einer Betriebsstellung und einer Wartungsstellung schwenkbar sind, und/oder
dass der Schwenkmechanismus (28) ein Gelenk (29), insbesondere ein Scharniergelenk, umfasst, das vorzugsweise im Bereich der Mitte der Förderschnecke (6) angeordnet ist, und/oder
dass die Siebeinheit (3) eine Wartungsöffnung (30) aufweist, zu der die Förderschnecke (6) in der Wartungsstellung hingeschwenkt ist.

4. Abscheidervorrichtung nach einem oder mehreren der vorherigen Ansprüche, **dadurch gekennzeichnet, dass** die Siebeinheit (3) einen mit der Steuereinheit (22) verbundenen und/oder im Abwasserzulauf (4) angeordneten ersten Sensor (23) aufweist, mit dem ein Zufluss des Abwassers in die Siebeinheit (3) und/oder ein Füllstand des Abwassers in der Siebeinheit (3) erfassbar ist, und/oder
dass die Steuereinheit (22) derart ausgebildet ist, dass diese den Schneckenmotor (7) bei mit dem ersten Sensor (23) erfassten Zufluss von Abwasser und/oder bei Erreichen eines in der Steuereinheit (22) hinterlegten maximalen Schwellfüllstands einschaltet und/oder
bei Ende des Zuflusses von Abwasser und/oder bei Erreichen eines in der Steuereinheit (22) hinterlegten minimalen Schwellfüllstands ausschaltet.

5. Abscheidervorrichtung nach einem oder mehreren der vorherigen Ansprüche, **dadurch gekennzeichnet, dass** die Siebeinheit (3) einen mit der Steuereinheit (22) verbundenen und/oder im ersten Sammelbehälter (8) angeordneten zweiten Sensor (24) aufweist, mit dem ein Füllstand des ersten Sammelbehälters (8) erfassbar ist.

6. Abscheidervorrichtung nach einem oder mehreren der vorherigen Ansprüche, **dadurch gekennzeichnet, dass** die Steuereinheit (22) derart ausgebildet ist, dass diese den Schneckenmotor (7) ausschaltet, ein erneutes Einschalten verhindert und/oder ein Signal zum manuellen Entleeren des ersten Sammelbehälters (8) ausgibt, wenn und/oder solange über den zweiten Sensor (24) ein maximal zulässiger Füllstand des ersten Sammelbehälters (8) erkannt wurde.

7. Abscheidervorrichtung nach einem oder mehreren der vorherigen Ansprüche, **dadurch gekennzeichnet, dass** die Fettabscheidereinheit (9) einen mit der Steuereinheit (22) verbundenen und/oder im Abscheidebehälter (10) angeordneten dritten Sensor (25) aufweist, mit dem eine Fetthöhe des sich an der Abwasseroberfläche sammelnden Fetts, insbesondere mittels Ultraschall, erfassbar ist.

8. Abscheidervorrichtung nach einem oder mehreren der vorherigen Ansprüche, **dadurch gekennzeichnet, dass** die Steuereinheit (22) derart ausgebildet ist, dass diese den Skimmermotor (13) bei Erreichen einer in der Steuereinheit (22) hinterlegten maximalen Fetthöhe einschaltet und/oder
bei Erreichen einer in der Steuereinheit (22) hinterlegten minimalen Fetthöhe ausschaltet.

9. Abscheidervorrichtung nach einem oder mehreren der vorherigen Ansprüche, **dadurch gekennzeichnet, dass** die Fettabscheidereinheit (9) einen mit der Steuereinheit (22) verbundenen und/oder im zweiten Sammelbehälter (15) angeordneten vierten Sensor (26) aufweist, mit dem ein Füllstand des zweiten Sammelbehälters (15) erfassbar ist.

10. Abscheidervorrichtung nach einem oder mehreren der vorherigen Ansprüche, **dadurch gekennzeichnet, dass** die Steuereinheit (22) derart ausgebildet ist, dass diese den Skimmermotor (13) ausschaltet, ein erneutes Einschalten verhindert und/oder ein Signal zum manuellen Entleeren des zweiten Sammelbehälters (15) ausgibt, wenn und/oder solange über den vierten Sensor (26) ein maximal zulässiger Füllstand des zweiten Sammelbehälters (15) erkannt wurde.

11. Abscheidervorrichtung nach einem oder mehreren der vorherigen Ansprüche, **dadurch gekennzeichnet, dass** die Abscheidervorrichtung (1) eine Feinschlammeinheit (17) aufweist, mit der sich am Boden des Abscheidebehälters (10) absetzender Feinschlamm aus dem Abscheidebehälter (10) entfernbar ist.

12. Abscheidervorrichtung nach einem oder mehreren der vorherigen Ansprüche, **dadurch gekennzeichnet, dass** die Feinschlammeinheit (17) einen Absetzbehälter (18), der bodenseitig mit dem Abscheidebehälter (10) über eine Leitung verbunden ist,
eine Pumpe (19), mit der der Feinschlamm aus dem Abscheidebehälter (10) in den Absetzbehälter (18) gepumpt werden kann, und/oder
ein Absperrelement (20), über das der sich im Absetzbehälter (18) abgesetzte Feinschlamm im geöffneten Zustand in einen Schlammbehälter abgelassen werden kann, umfasst.

13. Abscheidervorrichtung nach einem oder mehreren der vorherigen Ansprüche, **dadurch gekennzeichnet, dass** die Feinschlammeinheit (17) einen mit der Steuereinheit (22) verbundenen fünften Sensor (27) zum Überwachen des Absperrelements (20) aufweist und/oder
dass die Steuereinheit (22) derart ausgebildet ist, dass diese bei geöffnetem Absperrelement (20) ein Einschalten der Pumpe (19) verhindert.

## Claims

1. A separation device (1) for pre-cleaning wastewater in a building prior to discharging into a sewer system, particularly for businesses processing food products,
having a screen unit (3)
comprising a wastewater inlet (4),
a screen (5) for retaining coarse materials present in the in-fed wastewater,
a convoying screw (6) corresponding to the screen (5) such that the coarse materials retained by the screen (5) can be transported into a first collection container (8), and
a screw motor (7) for rotating the convoying screw (6),
having a fat separation unit (9)
connected downstream of the screen unit (3) in the flow direction of the wastewater and
comprising a separation tank (10) for receiving the wastewater screened by the screen unit (3),
a skimmer (11) by means of which the fat accumulating on the wastewater surface in the separation tank (10) is taken up and can be transported into a second collection container (15), and
a wastewater outlet (16),
wherein the skimmer (11) comprises an annularly closed fat receiving element (12) for immersing in the wastewater present in the separation tank (10), and a skimmer motor (13) for driving the fat receiving element (12), and
having a control unit (22) for controlling the separation device (1),
**characterized in that**
the simmer comprises a wiper (14) corresponding to the annularly closed fat receiving element (12) for wiping off the fat taken up on the surface of the fat receiving element (12), and
that the skimmer (11) is a tube or belt skimmer and that the control unit (22) is implemented such that said control unit switches the screw motor (7) and/or the skimmer motor (13) on or off depending on deposited time intervals and/or depending on at least one sensor signal.

2. The separation device according to the preceding claim, **characterized in that** the screen unit (3) and the fat separation unit (9) each comprise a separate housing and/or are connected to each other by means of a connecting pipe (32), or
the screen unit (3) and the fat separation unit (9) are integrated in a common housing and/or
that the at least one housing is a plastic housing.

3. The separation device according to any one or more of the preceding claims, **characterized in that** the screen unit (3) comprises a pivot mechanism (28) by means of which the convoying screw (6) and/or the screen (5) can be pivoted between an operating position and a maintenance position and/or
that the pivot mechanism (28) comprises a joint (29), particularly a hinged joint, preferably disposed in the region of the middle of the convoying screw (6) and/or
that the screen unit (3) comprises a maintenance opening (30) toward which the convoying screw (6) is pivoted in the maintenance position.

4. The separation device according to any one or more of the preceding claims, **characterized in that** the screen unit (3) comprises a first sensor (23) connected to the control unit (22) and/or disposed in the wastewater inlet (4), by means of which an inflow of the wastewater into the screen unit (3) and/or a fill level of the wastewater in the screen unit (3) can be captured and/or
that the control unit (22) is implemented such that said control unit switches on the screw motor (7) when inflow of wastewater is captured by means of the first sensor (23) and/or when a maximum threshold fill level deposited in the control unit (22) is reached, and/or
switches off the screw motor when the inflow of wastewater stops and/or when a minimum threshold fill level deposited in the control unit (22) is reached.

5. The separation device according to any one or more of the preceding claims, **characterized in that** the screen unit (3) comprises a second sensor (24) connected to the control unit (22) and/or disposed in the first collection container (8), by means of which a fill level of the first collection container (8) can be captured.

6. The separation device according to any one or more of the preceding claims, **characterized in that** the control unit (22) is implemented such that said control unit switches off the screw motor (7), prevents switching on again, and/or outputs a signal for manually emptying the first collection container (8) when and/or as long as a maximum permissible fill level of the first collection container (8) has been detected by means of the second sensor (24).

7. The separation device according to any one or more of the preceding claims, **characterized in that** the fat separation unit (9) comprises a third sensor (25) connected to the control unit (22) and/or disposed in the separation tank (10), by means of which the fat height of the fat accumulating on the wastewater surface can be detected, particularly by means of ultrasound.

8. The separation device according to any one or more of the preceding claims, **characterized in that** the control unit (22) is implemented such that said control unit switches on the skimmer motor (13) when a maximum fat height deposited in the control unit (22) is reached, and/or switches off the skimmer motor when a minimum fat height deposited in the control unit (22) is reached.

9. The separation device according to any one or more of the preceding claims, **characterized in that** the fat separation unit (9) comprises a fourth sensor connected to the control unit (22) and/or disposed in the second collection container (15), by means of which a fill level of the second collection container (15) can be detected.

10. The separation device according to any one or more of the preceding claims, **characterized in that** the control unit (22) is implemented such that said control unit switches off the skimmer motor (13), prevents switching on again, and/or outputs a signal for manually emptying the second collection container (15) when and/or as long as a maximum permissible fill level of the second collection container (15) has been detected by means of the fourth sensor (26).

11. The separation device according to any one or more of the preceding claims, **characterized in that** the separation device (1) comprises a fine sludge unit (17) by means of which the fine sludge settling on the floor of the separation tank (10) can be removed from the separation tank (10).

12. The separation device according to any one or more of the preceding claims, **characterized in that** the fine sludge unit (17) comprises a settling tank (18) connected at the floor of the separation tank (10) by means of a line,
a pump (19) by means of which the fine sludge can be pumped out of the separation tank (10) into the settling tank (18), and/or
a shut-off element (20) by means of which the fine sludge settled in the settling tank (18) can be drained into a sludge container in the open state.

13. The separation device according to any one or more of the preceding claims, **characterized in that** the fine sludge unit (17) comprises a fifth sensor (27) connected to the control unit (22) for monitoring the shut-off element (20), and/or that the control unit (22) is implemented such that said control unit prevents switching on the pump (19) when the shut-off element (20) is open.

## Revendications

1. Dispositif de séparateur (1) pour la pré-épuration côté bâtiment d'eaux usées avant leur introduction dans un système de canalisation, en particulier pour les entreprises de transformation de denrées alimentaires,
avec une unité de tamis (3) qui comporte
une arrivée d'eaux usées (4),
un tamis (5) pour retenir les matières grossières présentes dans les eaux usées amenées,
une vis transporteuse (6) correspondant au tamis (5) de telle sorte que les matières grossières retenues par le tamis (5) peuvent être transportées dans un premier récipient de collecte (8), et
un moteur (7) de vis transporteuse pour faire tourner la vis transporteuse (6),
avec une unité de séparateur de graisse (9),
qui est placée en aval de l'unité de tamis (3) dans le sens d'écoulement des eaux usées et
qui comprend un récipient de séparation (10) destiné à recevoir les eaux usées tamisées par l'unité de tamis (3),
un écumeur (11), avec lequel la graisse qui s'accumule à la surface des eaux usées dans le récipient de séparation (10) peut être absorbée et transportée dans un deuxième récipient de collecte (15), et
un écoulement d'eaux usées (16),
l'écumeur (11) comprenant un élément d'absorption de graisse (12) fermé de manière annulaire destiné à être immergé dans l'eau usée contenue dans le récipient de séparation (10) et un moteur (13) d'écumeur pour entraîner l'élément d'absorption de graisse (12), et
avec une unité de commande (22) pour commander le dispositif de séparateur (1),
**caractérisé en ce que** l'écumeur comprend un racleur (14) correspondant à l'élément d'absorption de graisse (12) fermé de manière annulaire pour racler la graisse reçue par l'élément d'absorption de graisse (12) sur sa surface,
**en ce que** l'écumeur (11) est un écumeur à tuyau ou à bande et **en ce que** l'unité de commande (22) est conçue de telle sorte qu'elle met en marche et/ou arrête le moteur (7) de vis transporteuse et/ou le moteur (13) d'écumeur en fonction d'intervalles de temps enregistrés et/ou en fonction d'au moins un signal de capteur.

2. Dispositif de séparateur selon la revendication précédente, **caractérisé en ce que** l'unité de tamis (3) et l'unité de séparateur de graisse (9) présentent chacune un boîtier séparé et/ou sont reliées l'une à l'autre par un tube de liaison (32) ou
**en ce que** l'unité de tamis (3) et l'unité de séparateur de graisse (9) sont intégrées dans un boîtier commun et/ou
**en ce que** le, au moins un, boîtier est un boîtier en matière plastique.

3. Dispositif de séparateur selon l'une quelconque ou plusieurs des revendications précédentes, **caractérisé en ce que** l'unité de tamis (3) comprend un mécanisme de pivotement (28) au moyen duquel la vis transporteuse (6) et/ou le tamis (5) peuvent/peut pivoter entre une position de fonctionnement et une position de maintenance, et/ou
**en ce que** le mécanisme de pivotement (28) comprend une articulation (29), en particulier une articulation à charnière, qui est disposée de préférence dans la zone du milieu de la vis transporteuse (6), et/ou
**en ce que** l'unité de tamis (3) présente une ouverture de maintenance (30) vers laquelle la vis transporteuse (6) est pivotée en position de maintenance.

4. Dispositif de séparateur selon l'une quelconque ou plusieurs des revendications précédentes, **caractérisé en ce que** l'unité de tamis (3) présente un premier capteur (23) relié à l'unité de commande (22) et/ou disposé dans l'arrivée d'eaux usées (4), avec lequel un afflux d'eaux usées dans l'unité de tamis (3) et/ou un niveau de remplissage d'eaux usées dans l'unité de tamis (3) peut être détecté, et/ou
**en ce que** l'unité de commande (22) est conçue de telle sorte que celle-ci met en marche le moteur (7) de vis transporteuse en cas de détection d'afflux d'eaux usées par le premier capteur (23) et/ou en cas de réalisation d'un niveau de remplissage seuil maximal enregistré dans l'unité de commande (22) et/ou
que celle-ci arrête le moteur (7) de vis transporteuse à la fin de l'afflux d'eaux usées et/ou en cas de réalisation d'un niveau de remplissage seuil minimal enregistré dans l'unité de commande (22).

5. Dispositif de séparateur selon l'une quelconque ou plusieurs des revendications précédentes, **caractérisé en ce que** l'unité de tamis (3) présente un deuxième capteur (24) relié à l'unité de commande (22) et/ou disposé dans le premier récipient de collecte (8), avec lequel un niveau de remplissage du premier récipient de collecte (8) peut être détecté.

6. Dispositif de séparateur selon l'une quelconque ou plusieurs des revendications précédentes, **caractérisé en ce que** l'unité de commande (22) est conçue de telle sorte qu'elle arrête le moteur (7) de vis transporteuse, empêche une nouvelle mise en marche et/ou émet un signal pour vider manuellement le premier récipient de collecte (8) si et/ou tant qu'un niveau de remplissage maximal admissible du premier récipient de collecte (8) a été détecté par le deuxième capteur (24).

7. Dispositif de séparateur selon l'une quelconque ou plusieurs des revendications précédentes, **caractérisé en ce que** l'unité de séparateur de graisse (9) présente un troisième capteur (25) relié à l'unité de commande (22) et/ou disposé dans le récipient de séparation (10), avec lequel une hauteur de graisse de la graisse s'accumulant à la surface des eaux usées peut être détectée, en particulier au moyen d'ultrasons.

8. Dispositif de séparateur selon l'une quelconque ou plusieurs des revendications précédentes, **caractérisé en ce que** l'unité de commande (22) est conçue de telle sorte que celle-ci met en marche le moteur (13) d'écumeur à la réalisation d'une hauteur de graisse maximale enregistrée dans l'unité de commande (22) et/ou
l'arrête à la réalisation d'une hauteur de graisse minimale enregistrée dans l'unité de commande (22).

9. Dispositif de séparateur selon l'une quelconque ou plusieurs des revendications précédentes, **caractérisé en ce que** l'unité de séparateur de graisse (9) présente un quatrième capteur (26) relié à l'unité de commande (22) et/ou disposé dans le deuxième récipient de collecte (15), avec lequel un niveau de remplissage du deuxième récipient de collecte (15) peut être détecté.

10. Dispositif de séparateur selon l'une quelconque ou plusieurs des revendications précédentes, **caractérisé en ce que** l'unité de commande (22) est conçue de telle sorte que celle-ci arrête le moteur (13) d'écumeur, empêche une nouvelle mise en marche et/ou émet un signal pour vider manuellement le deuxième récipient de collecte (15) si et/ou tant qu'un niveau de remplissage maximal admissible du deuxième récipient de collecte (15) a été détecté par le quatrième capteur (26).

11. Dispositif de séparateur selon l'une quelconque ou plusieurs des revendications précédentes, **caractérisé en ce que** le dispositif de séparateur (1) présente une unité de boues fines (17), avec laquelle les boues fines qui se déposent au fond du récipient de séparation (10) peuvent être éliminées du récipient de séparation (10).

12. Dispositif de séparateur selon l'une quelconque ou plusieurs des revendications précédentes, **caractérisé en ce que** l'unité de boues fines (17) comporte un récipient de sédimentation (18) qui est relié côté fond au récipient de séparation (10) par une conduite,
une pompe (19) à l'aide de laquelle les boues fines peuvent être pompées du récipient de séparation (10) dans le récipient de sédimentation (18), et/ou
un élément d'arrêt (20), par l'intermédiaire duquel, à l'état ouvert, les boues fines qui se sont déposées dans le récipient de sédimentation (18) peuvent être évacuées vers un récipient à boues.

13. Dispositif de séparateur selon l'une quelconque ou plusieurs des revendications précédentes, **caractérisé en ce que** l'unité de boues fines (17) comporte un cinquième capteur (27) relié à l'unité de commande (22) pour surveiller l'élément d'arrêt (20) et/ou
**en ce que** l'unité de commande (22) est conçue de telle sorte que celle-ci, à l'état ouvert de l'élément d'arrêt (20), empêche la mise en marche de la pompe (19).
